# EUROPEAN PATENT SPECIFICATION

(11) **EP 2 080 692 B1**
(45) Date of publication and mention of the grant of the patent: **13.04.2011**
(21) Application number: 09150806.9
(22) Date of filing: 16.01.2009
(51) Int. Cl.: B62D 25/08, B62D 33/04

(54) **A bulkhead for a motor vehicle**
Trennwand für ein Kraftfahrzeug
Cloison pour véhicule à moteur

(30) Priority: 17.01.2008 GB 0800754
(43) Date of publication of application: 22.07.2009
(73) Proprietor: Ford Global Technologies, LLC, Dearborn, MI 48126 (US)
(72) Inventor: Newman, Richard, Chelmsford, Essex CM3 6LX (GB)
(74) Representative: Grunfeld, David Peter

(56) References cited:
- FR-A- 2 692 861
- US-B1- 6 474 713

## Description

This invention relates to motor vehicles and in particular to a bulkhead for a van.

It is well known to provide a motor vehicle such as a van with a bulkhead to separate a cargo carrying area from a passenger carrying area often referred to a crew cabin.

It is a problem with modern van design that it is required to carrying the maximum possible load in a van having the minimum overall length in order to permit the van to be as easy as possible to park. This often results in a compromised crew cabin in which the available space does not permit a large driver to adjust a seating position to the optimum position. That is to say, whereas a driver of 85% percentile size can be satisfactorily accommodated, a 100% percentile driver cannot. Although this problem can be overcome by moving the bulkhead separating the crew cabin from the cargo carrying compartment rearwards to provide more space in the crew cabin this will result in a reduction in cargo carrying capacity unless the length of the van is increased which is not acceptable. Although the distance the bulkhead has to be moved in many cases may be relatively small, existing vans are designed to accommodate standards loads such as, for example, 'euro pallets' and a small reduction in cargo carrying area length may reduce a van's capacity from 4 to 2 euro pallets which is clearly unacceptable.

US6474713, according to the preamble of claim 1, describes a van bulkhead having a removable upper portion with a cavity formed therein. The upper portion may be turned through 180 degrees such that either the cavity may face the passenger compartment, in which case the passenger seats may recline back into the cavity for maximum operator or passenger comfort, or the cavity may face the cargo space, thereby allowing maximum cargo capacity in the vehicle but requiring the passenger seats to be used in a forward position only.

The main object of this invention is to provide a bulkhead that is adaptable so as to permit maximum cargo carrying capacity of the van to be used when required while selectively permitting an increase in cabin space when the maximum cargo carrying capacity is not required.

According to a first aspect of the invention there is provided a bulkhead for separating a cargo carrying compartment of a motor vehicle from a passenger carrying compartment of a motor vehicle comprising a first bulkhead panel fixed to the motor vehicle and a second bulkhead panel releasably secured to the first bulkhead panel so as to fill an aperture formed in the first bulkhead panel, the second removable bulkhead panel having a cavity formed therein and being securable in a first position in which the cavity faces the cargo carrying compartment so as not to intrude into the cargo carrying compartment, and a second position in which the cavity faces the passenger carrying compartment, wherein the second removable bulkhead panel has a first substantially planar end portion and a second end portion having the cavity formed therein, the first end portion being located above the second end portion when the second bulkhead panel is in its first position, and the first end portion being located below the second end portion when the second bulkhead panel is in its second position.

A boundary between the first and second end portions may be arranged to be coincident with a central horizontal axis of the second bulkhead panel.

The securing means used to releasably secure the second bulkhead panel to the first bulkhead panel may be disposed so as to permit the second bulkhead panel to be secured in the first and second positions.

A seal may be disposed between the first and second bulkheads.

Preferably, quick release fasteners may be used to releasably secure the second bulkhead panel to the first bulkhead panel.

According to a second aspect of the invention there is provided a motor vehicle having a bulkhead constructed in accordance with said first aspect of the invention.

The motor vehicle may have a seat mounted in the passenger carrying compartment and the cavity in the second bulkhead panel may be sufficiently wide to accommodate an upper end of the seat when the second bulkhead panel is secured in the second position.

The motor vehicle may be a van.

The invention will now be described by way of example with reference to the accompanying drawing of which:-
Fig.1 is a left hand side view of a van showing cargo and passenger carrying compartments separated by a bulkhead;
Fig.2a is a pictorial representation of a bulkhead according to the invention showing a removable second bulkhead panel in a first position;
Fig.2b is a pictorial representation of a bulkhead according to the invention showing a removable second bulkhead panel in a second position;
Fig.3a is a right hand side view of the bulkhead shown in Fig.2a;
Fig.3b is a right hand side view of the bulkhead shown in Fig.2b; and
Fig.4 is a diagrammatic representation of an alternative embodiment of bulkhead according to the invention.

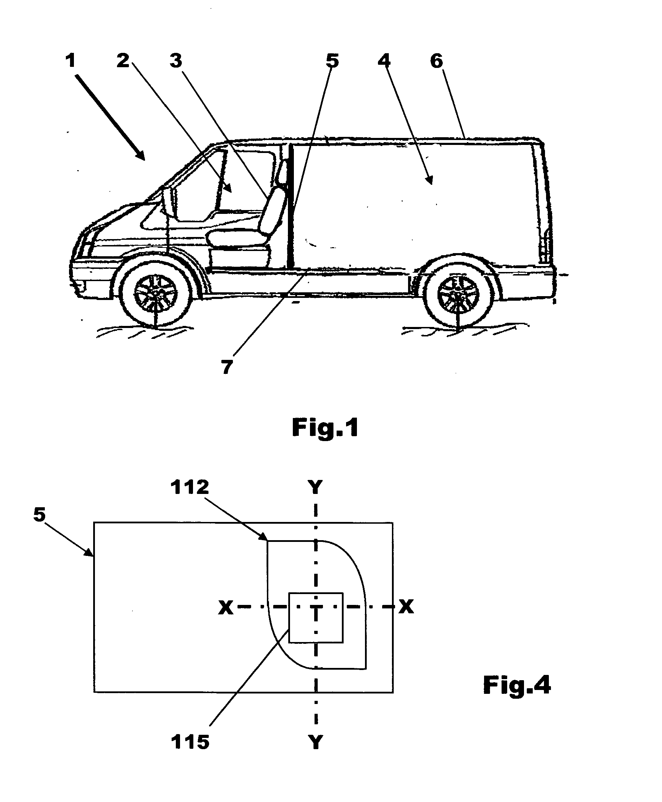

With reference to Fig.1 there is shown a motor vehicle in the form of a van 1 having a roof structure 6 and a floor structure 7 which form part of a body structure of the van 1.

A bulkhead 5 is secured to the body structure in order to separate a passenger carrying compartment or crew cabin 2 from a cargo carrying compartment 4. At least one seat 3 is mounted in the crew cabin 2 to accommodate a passenger such as a driver (not shown).

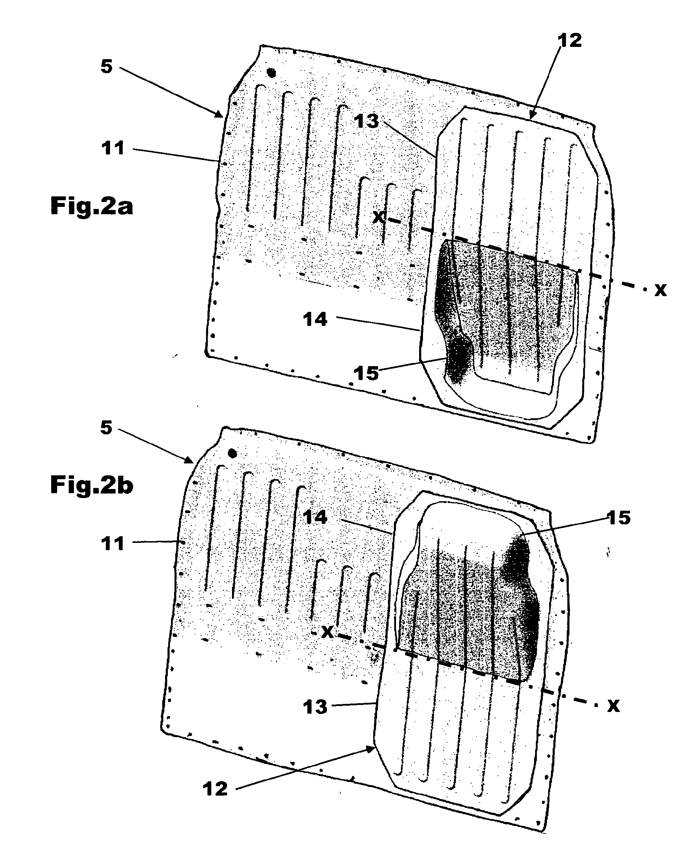

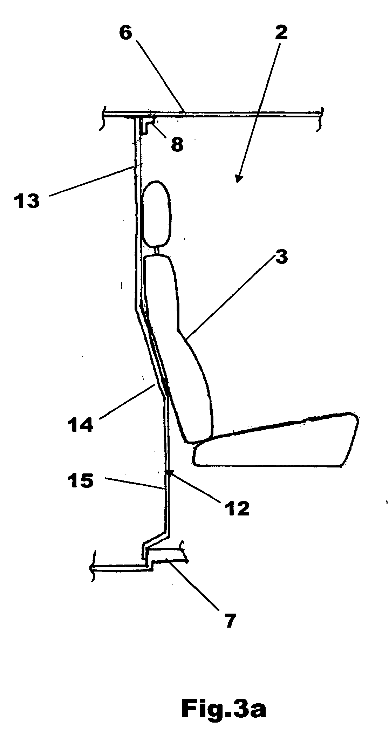

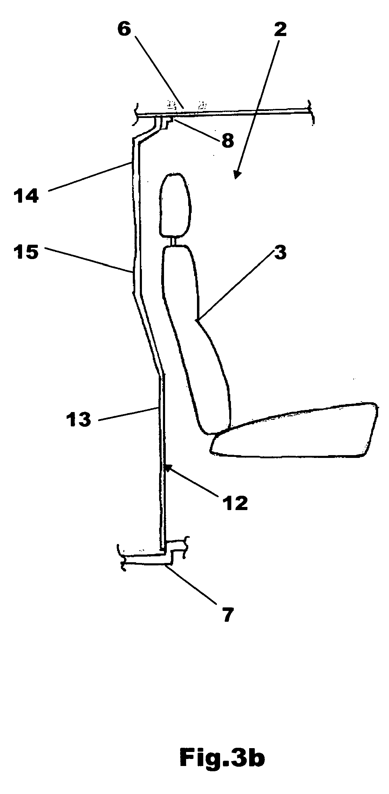

With reference to Figs 2a to 3b the bulkhead 5 shown diagrammatically on Fig.1 is shown to comprise of a first bulkhead panel 11 defining an aperture into which is releasably secured a second releasable bulkhead panel 12. A number of fasteners (not shown) are used to fix the first bulkhead panel 11 around its outer circumference to the body structure of the van 1. In this case the upper end of the bulkhead panel 11 is fixed to the roof structure of the van 1 by a roof rib 8 and a lower end is fastened to a step in the floor structure 7. It will be appreciated that the first bulkhead panel 11 is also secured on its vertical sides to the body structure of the van 1 and in most cases it is secured to 'B'-posts (not shown) of the van 1 so as to provide the required structural integrity.

The second releasable panel has a first substantially planar end portion 13, a second end portion 14 and a cavity 15 formed in the second end portion 14.

In the example shown, a boundary between the first and second end portions 13 and 14 is arranged to be coincident with a horizontal central axis X-X so that the first substantially planar end portion 13 is located on one side of the central transverse axis X-X and the second end portion 14 is located on the other side of the central axis X-X. It will however be appreciated that the boundary need not be so arranged.

A seal (not shown) is disposed between the first and second bulkheads 11 and 12 so as to reduce the transfer of noise, dust and smells from the cargo carrying compartment to the crew cabin 2.

The second bulkhead panel 12 is secured to the first bulkhead panel 11 by a number of securing means such as quick release fasteners (not shown). For example quarter turn fasteners as manufactured by Southco of Concordville Pennsylvania USA can be used. These fasteners allow the second bulkhead panel 12 to be quickly removed from the first bulkhead panel 11. The securing means used to releasably secure the second bulkhead panel 12 to the first bulkhead panel 11 are symmetrically disposed on each side of the central axis X-X so as to permit the second bulkhead panel 12 to be secured in first and second positions or orientations. Similarly, the outer periphery of the second bulkhead panel 12 is in this case symmetrical on each side of the central axis X-X so as to permit the second bulkhead panel 12 to be secured in the first and second positions.

When the second bulkhead panel 12 is secured in the first position, the first end portion 13 is located above the second end portion 14 and the cavity 15 faces the cargo carrying compartment 4 so as not to intrude into the cargo carrying compartment 4 and, when the second bulkhead panel 12 is orientated in the second position, the first end portion 13 is located below the second end portion 14 and the cavity 15 faces the crew cabin 2.

The width of the cavity 15 in the second bulkhead panel 12 is sufficient to accommodate an upper end of the seat 3 when the second bulkhead panel 12 is secured in the second position thereby providing additional space in the crew cabin 2 to allow the seat 3 to either be moved back further or be reclined further.

However, when the second bulkhead panel 12 is in the first position it will be appreciated that the cavity 15 does not intrude into the cargo carrying compartment 4 and so no loss in cargo carrying capacity occurs.

To move the second bulkhead panel 12 between its first and second positions it is merely necessary to release the securing means holding it to the first bulkhead panel 11, rotate the second bulkhead panel through 180 degrees about its central axis X-X and re-secure it to the first bulkhead panel 11.

Although in the example described above the cavity lies solely in the second end portion to one side of a horizontal central axis it will be appreciated that this need not be the case and, for example, the cavity may traverse the central axis so that a portion of it lies in the first end portion.

Fig.4 shows an alternative arrangement in which the second bulkhead panel 112 is not symmetrical about the horizontal axis X-X or a vertical central axis Y-Y. It will also be appreciated that the cavity 115 traverses the horizontal central axis X-X. The second bulkhead panel 112 in this case has an outer periphery that is inverted to either side of the vertical axis Y-Y or looking at it another way is transposed above and below the horizontal axis X-X. In this case rotation about both axes is required to effect the transformation from the first to the second position.

## Claims

1. A bulkhead (5) for separating a cargo carrying compartment (4) of a motor vehicle (1) from a passenger carrying compartment (2) of the motor vehicle (1), the bulkhead (5) comprising a first bulkhead panel (11) fixed to the motor vehicle (1) and a second bulkhead panel (12) releasably secured to the first bulkhead panel (11) so as to fill an aperture formed in the first bulkhead panel (11), the second removable bulkhead panel (12) having a cavity (15) formed therein and being securable in a first position in which the cavity (15) faces the cargo carrying compartment (4) so as not to intrude into the cargo carrying compartment (4), and a second position in which the cavity (15) faces the passenger carrying compartment (2), **characterised in that** the second removable bulkhead panel (12) has a first substantially planar end portion (13) and a second end portion (14) having the cavity (15) formed therein, the first end portion (13) being located above the second end portion (14) when the second bulkhead panel (12) is in its first position, and the first end portion (13) being located below the second end portion (14) when the second bulkhead panel (12) is in its second position.

2. A bulkhead (5) as claimed in claim 1, wherein a boundary between the first and second end portions (13, 14) is arranged to be coincident with a central horizontal axis of the second bulkhead panel (12).

3. A bulkhead (5) as claimed in claim 1 or 2, further comprising a securing means to releasably secure the second bulkhead panel (12) to the first bulkhead panel (11) so as to permit the second bulkhead panel (12) to be secured in the first and second positions.

4. A bulkhead (5) as claimed in claim 3, wherein the securing means comprises quick release fasteners.

5. A bulkhead (5) as claimed in any of claims 1 to 4, wherein a seal is disposed between the first and second bulkhead panels (11, 12).

6. A motor vehicle (1) having a bulkhead (5) as claimed in any of claims 1 to 5.

7. A motor vehicle (1) as claimed in claim 6, wherein the motor vehicle (1) has a seat (3) mounted in the passenger carrying compartment (2), and the cavity (15) in the second bulkhead panel (12) is sufficiently wide to accommodate an upper end of the seat (3) when the second bulkhead panel (12) is secured in the second position.

8. A motor vehicle (1) as claimed in claim 6 or 7, wherein the motor vehicle (1) is a van.

## Patentansprüche

1. Trennwand (5) zum Trennen eines Laderaums (4) eines Kraftfahrzeugs (1) von einem Fahrgastraum (2) des Kraftfahrzeugs (1), wobei die Trennwand (5) eine am Kraftfahrzeug (1) befestigte erste Trennwandplatte (11) und eine lösbar an der ersten Trennwandplatte (11) befestigte zweite Trennwandplatte (12) zum Füllen einer in der ersten Trennwandplatte (11) gebildeten Öffnung umfasst, wobei die zweite entfernbare Trennwandplatte (12) einen darin ausgebildeten Hohlraum (15) hat und in einer ersten Position, in der der Hohlraum (15) dem Laderaum (4) zugewandt ist, um nicht in den Laderaum (4) einzudringen, und einer zweiten Position, in der der Hohlraum (15) dem Fahrgastraum (2) zugewandt ist, befestigt werden kann, **dadurch gekennzeichnet, dass** die zweite entfernbare Trennwandplatte (12) einen ersten, im Wesentlichen planaren Endabschnitt (13) und einen zweiten Endabschnitt (14) hat, in dem der Hohlraum (15) ausgebildet ist, wobei der erste Endabschnitt (13) über dem zweiten Endabschnitt (14) angeordnet ist, wenn die zweite Trennwandplatte (12) in ihrer ersten Position ist, und unter dem zweiten Endabschnitt (14) angeordnet ist, wenn die zweite Trennwandplatte (12) in ihrer zweiten Position ist.

2. Trennwand (5) nach Anspruch 1, wobei eine Grenze zwischen dem ersten und dem zweiten Endabschnitt (13, 14) so angeordnet ist, dass sie mit einer mittleren horizontalen Achse der zweiten Trennwandplatte (12) zusammenfällt.

3. Trennwand (5) nach Anspruch 1 oder 2, ferner mit einem Befestigungsmittel zur lösbaren Befestigung der zweiten Trennwandplatte (12) an der ersten Trennwandplatte (11), damit die zweite Trennwandplatte (12) in der ersten und der zweiten Position befestigt werden kann.

4. Trennwand (5) nach Anspruch 3, wobei das Befestigungsmittel Schnelltrennbefestiger umfasst.

5. Trennwand (5) nach einem der Ansprüche 1 bis 4, wobei eine Dichtung zwischen der ersten und der zweiten Trennwandplatte (11, 12) angeordnet ist.

6. Kraftfahrzeug (1) mit einer Trennwand (5) nach einem der Ansprüche 1 bis 5.

7. Kraftfahrzeug (1) nach Anspruch 6, wobei das Kraftfahrzeug (1) einen Sitz (3) hat, der im Fahrgastraum (2) montiert ist, und der Hohlraum (15) in der zweiten Trennwandplatte (12) ausreichend breit ist, dass ein oberes Ende des Sitzes (3) aufgenommen werden kann, wenn die zweite Trennwandplatte (12) in der zweiten Position befestigt ist.

8. Kraftfahrzeug (1) nach Anspruch 6 oder 7, wobei das Kraftfahrzeug (1) ein Lieferwagen ist.

## Revendications

1. Cloison (5) pour séparer un compartiment de transport de cargaison (4) d'un véhicule automobile (1) d'un compartiment de transport de passagers (2) du véhicule automobile (1), la cloison (5) comprenant un premier panneau de cloison (11) fixé au véhicule automobile (1) et un deuxième panneau de cloison (12) fixé de manière amovible au premier panneau de cloison (11) de manière à remplir une ouverture formée dans le premier panneau de cloison (11), le deuxième panneau de cloison amovible (12) dans laquelle est formée une cavité (15) et pouvant être fixé dans une première position dans laquelle la cavité (15) fait face au compartiment de transport de cargaison (4) de façon à ce qu'il ne pénètre pas dans le compartiment de transport de cargaison (4), et une deuxième position dans laquelle la cavité (15) fait face au compartiment de transport de passagers (2), **caractérisé en ce que** le deuxième panneau de cloison amovible (12) a une première portion d'extrémité substantiellement plane (13) et une deuxième portion d'extrémité (14) dans laquelle est formée la cavité (15), la première portion d'extrémité (13) étant située au-dessus de la deuxième portion d'extrémité (14) quand le deuxième panneau de cloison (12) est dans sa première position, et la première portion d'extrémité (13) étant située en dessous de la deuxième portion d'extrémité (14) quand le deuxième panneau de cloison (12) est dans sa deuxième position.

2. Cloison (5) selon la revendication 1, dans laquelle une limite entre les première et deuxième portions d'extrémité (13, 14) est agencée de manière à coïncider avec un axe horizontal central du deuxième panneau de cloison (12).

3. Cloison (5) selon la revendication 1 ou 2, comprenant en outre un moyen de fixation pour fixer de manière amovible le deuxième panneau de cloison (12) au premier panneau de cloison (11) de manière à permettre au deuxième panneau de cloison (12) d'être fixé dans les première et deuxième positions.

4. Cloison (5) selon la revendication 3, dans laquelle le moyen de fixation comprend des attaches à dégagement rapide.

5. Cloison (5) selon l'une quelconque des revendications 1 à 4, dans laquelle un joint est prévu entre les premier et deuxième panneaux de cloison (11, 12).

6. Véhicule automobile (1) ayant une cloison (5) selon l'une quelconque des revendications 1 à 5.

7. Véhicule automobile (1) selon la revendication 6, dans lequel le véhicule automobile (1) a un siège (3) monté dans le compartiment de transport de passagers (2), et la cavité (15) dans le deuxième panneau de cloison (12) est suffisamment large pour recevoir une extrémité supérieure du siège (3) lorsque le deuxième panneau de cloison (12) est fixé dans la deuxième position.

8. Véhicule automobile (1) selon la revendication 6 ou 7, dans lequel le véhicule automobile (1) est une camionnette.
